# EUROPEAN PATENT APPLICATION

(11) **EP 3 770 050 A1**
(43) Date of publication of application: **27.01.2021**
(21) Application number: 20187117.5
(22) Date of filing: 22.07.2020
(51) Int. Cl.: B62H 5/10, B62H 3/00

(54) **APPARATUS FOR SECURING A BICYCLE**

(30) Priority: 23.07.2019 GB 201910514
(71) Applicant: Bison Security Products (Wales) Limited, Caer Wern Merthyr Tydfil CF48 1AD (GB)
(72) Inventor: DAVIES, Gareth, Penderyn, CF44 0YJ (GB)
(74) Representative: Cordy, Nicole Jessica

(57) **Abstract**

An apparatus for securing a bicycle, the apparatus comprising a structure (110) configured to be mounted to a secure surface, wherein the structure (110) comprises an internal cavity (115), a door (117) moveable relative to the structure (110) between an open position in which the pedal can be received into the internal cavity (115) of the structure and a closed position in which the pedal is retained in the internal cavity, and a locking device (120) configured to lock the door (117) in the closed position. This provides a simple, convenient and secure apparatus which reduces the risk of bicycle thefts, particularly from within a building.

## Description

### Field of the invention

The present invention relates to an apparatus for securing a bicycle, in particular apparatus for locking a pedal of the bicycle within a structure to prevent theft of the bicycle.

### Background

Bicycles or bikes, which includes all types of manual and electric bicycle, are commonly used for both recreational and work purposes. However, there is a significant problem with bicycle thefts.

Typically, when a bike is not in use it is secured with a chain or other security device, such as a D-lock, which may pass through one or more components of the bike and which may prevent rotation of one or more wheels. Although owners typically secure bicycles in public areas when they are not in use, these precautions are often not taken when storing the bike in a locked facility or compound, particularly on their own property. Increasingly, garages, homes, outbuildings and sheds are being broken into in order to steal these stored bicycles.

Even if a bicycle is secured with a chain or other known security device within a building, these can often be broken relatively quickly using tools, for example bolt cutters. Alternatively, a wheel or other component of the bicycle can be removed in order to release the remainder of the bicycle.

In addition, the process of attaching the security device is often fiddly, time consuming and messy, as the user is required to touch the bike wheels or other components that are frequently muddy or wet.

It is possible to buy secure bike containers or lock-ups which are generally made of metal and have locks that are reasonably difficult to pick or break. However, these are very expensive.

Accordingly, there is a need for an improved apparatus for securing a bicycle which is simple to use and convenient. In addition, there is a need for an improved apparatus for securing a bicycle that is suitable for use within a building, shed or other compound to reduce the risk of the bicycle being stolen.

### Summary of the Invention

The present invention provides an apparatus for securing a bicycle, the apparatus comprising:
a structure configured to be mounted to a secure surface, wherein the structure comprises an internal cavity;
a door moveable relative to the structure between an open position in which the pedal can be received into the internal cavity of the structure and a closed position in which the pedal is retained in the internal cavity; and
a locking device configured to lock the door in the closed position.

The apparatus may be configured to secure any kind of bicycle pedal within the internal cavity of the structure. Thus, the present invention may be used to secure any kind of bicycle that has pedals, such as mountain bikes, road bikes, BMX bikes, or electric bikes.

An advantage of this apparatus is that the structure is attached to a secure surface (i.e. to a surface that cannot be easily moved). For example, the secure surface may be the ground, or the floor of a building. This prevents the bike and apparatus from being lifted and carried away by a potential thief.

In addition, once the apparatus has been installed, in order to secure the bicycle relative to the secure surface the user simply has to open the door, insert the pedal into the internal cavity of the structure, close the door and lock the door in the closed position. This is quick and convenient. It also does not require the user to contact any parts of the bicycle which may be soiled or wet.

When the pedal is received into the internal cavity of the structure and the door is in the closed position the pedal cannot be removed from the structure without unlocking the locking device.

The structure and/or the door are preferably configured to shield or prevent access to the interconnection between the pedal and the crank arm. Advantageously, this prevents a potential thief from unscrewing the pedal in order to release the bicycle from the apparatus.

Optionally, the structure and the door are configured to substantially encase or enclose the pedal when the door is in the closed position. For example, the structure may form (or comprise) a housing which substantially or completely surrounds the pedal.

Optionally, the structure and/or the door are configured to shield or restrict access to the interconnection between the crank arm and the bicycle frame. Advantageously, this prevents a potential thief from removing the crank arm from the bicycle frame in order to release the bicycle from the apparatus.

Preferably, the crank arm attached to the pedal is also received into the internal cavity of the structure. The structure may therefore be configured such that the pedal and the crank arm can be received into the internal cavity.

Optionally, the structure and the door are configured to substantially encase or enclose the pedal and the crank arm when the door is in the closed position. For example, when the door is in the closed position the structure and the door may form a housing which substantially or completely surrounds the pedal and the crank arm.

In some embodiments, the structure comprises a base and at least one upstanding wall, wherein the internal cavity is defined by the space between the base and the at least one upstanding wall.

The structure may further comprise a top. The door may form part of, or be attached to, the at least one upstanding wall.

For example, when the door is in the open position the structure may have an opening which allows the user to insert the pedal (or the pedal and the crank arm) into the internal cavity.

When the door is moved to the closed position the opening in the structure is closed or sealed, thereby securing the pedal (or the pedal and the crank arm) in the internal cavity. As such, the bicycle can be wheeled to insert the pedal or the pedal and the crank arm into the structure and the door can be locked without requiring the user to touch any components of the bicycle which may be wet or soiled.

Optionally, the structure comprises a base, a top, two opposing side walls and an end wall.

In the closed position the door may be disposed opposite the end wall and adjacent the two side walls and the base.

Optionally, the door is attached to the base of the structure. When the door is in the closed position it may abut the two sides walls of the structure.

Optionally, one of the side walls comprises an opening configured to receive a portion of the bicycle. In some embodiments the portion of the bicycle may be one or more of: part of the bike frame, the bottom bracket or bottom bracket shell.

The base of the structure may comprise a plurality of apertures configured to receive fastening means (e.g. bolts) therethrough to mount the structure to a secure surface.

Optionally, the door is pivotable relative to the structure.

The door may be pivotably connected to the structure, for example by at least one hinge. Optionally, the door may be pivotably connected to the base of the structure.

Optionally the, or each, hinge is positioned such that they are not accessible when the door is in the closed position. For example, the hinges may be disposed on the internal surface of the door. The, or each hinge may be a security hinge. This may prevent (or reduce the risk of) the hinges being removed when the door is in the closed position in order to remove the bicycle from the apparatus.

It will be appreciated that any kind of locking device arranged to lock the door in the closed position could be used in the present invention.

Optionally, the locking device may be attached to or mounted on the door or the structure. For example, the locking device may be mounted to the top of the structure.

The locking device could be manual or electronic.

The locking device may require a physical key, an electronic key or a combination code.

Optionally, the locking device comprises a retractable bolt or latch. The retractable bolt or latch preferably projects into the internal cavity of the structure. This prevents the locking device from being removed by simply cutting the shackle, bolt or latch of the locking device from outside the structure (as would be the case with an external padlock for example).

Optionally, the apparatus comprises a tab having an aperture therethrough (or an eyelet) attached to an inner surface of the door, wherein the aperture is arranged such that when the door is in the closed position the retractable bolt or latch of the locking device can be inserted through the aperture to lock the door in the closed position.

The locking device may comprise a bullet lock, or a pin tumbler lock.

Optionally, the apparatus further comprises a barrier member mounted to the structure and arranged to project into the internal cavity such that, in use, the barrier member is positioned to restrict movement of the pedal.

The barrier member may advantageously prevent or restrict movement of the pedal within the structure and/or the bicycle being lifted when the door is in the closed position, which could result in damage to the bicycle.

There may be a gap between the top of the pedal and the barrier member.

Optionally, the barrier member is positioned to at least partially abut the top of the pedal when the pedal is received into the internal cavity.

The position of the barrier member may be adjustable. In some embodiments, the length or height of the barrier member may be adjustable. For example, the barrier member may be raised or lowered to adjust the distance that the barrier member projects into the internal cavity. This may be done by adjusting the connection between the barrier member and the structure.

Optionally, the barrier member is a plate or a rod, preferably made of metal.

Optionally, the structure and/or the door comprise or consist of steel, hardened steel, titanium and/or tungsten carbide. This may make it more difficult to cut through the structure and/or the door.

Optionally, one or more dimensions of the structure may be adjustable to adapt the structure for use with a particular bicycle.

### Specific Description

Illustrative embodiments of the invention will now be described, by way of example only, with reference to the accompanying drawings, in which:
**Figure 1** shows a front view of an apparatus for securing a bicycle in accordance with the present invention, with the door in an open position;
**Figure 2** shows the apparatus of Figure 1 with the door in the closed position;
**Figure 3** shows a front perspective view of another embodiment of an apparatus for securing a bicycle in accordance with the present invention, with the door in an open position; and
**Figure 4** shows the apparatus of Figure 3 with the door in the closed position.

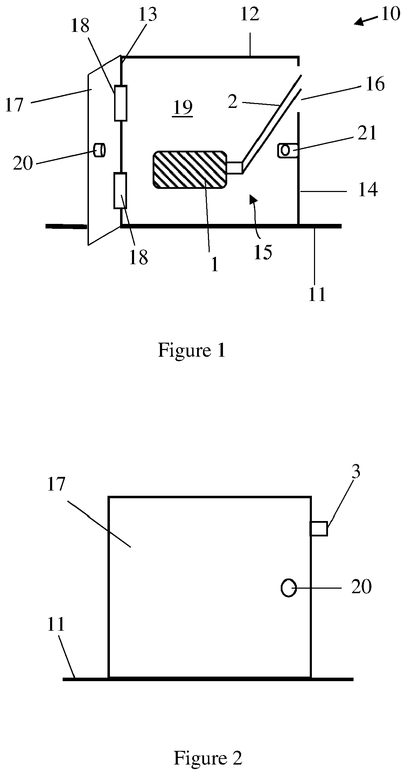

It will be appreciated that Figures 1 to 4 are schematic illustrations and so features shown therein are not drawn to scale.

In Figure 1 the apparatus for securing a bicycle comprises a structure 10 and a door 17.

The structure 10 comprises a base 11 configured to be mounted to a secure surface (such as the floor of a building), a top 12, two upstanding side walls 13, 14 and an upstanding end wall 19. An internal cavity 15 is defined by the space between the walls 13, 14, 19, the top 12 and the base 11. The internal cavity 15 is sized to receive the pedal 1 and the crank arm 2 of a bicycle.

The door 17 is pivotably mounted to the side wall 13 of the structure 10 by two hinges 18. The hinges 18 are disposed on the internal surfaces of the door 17 and wall 13, so that they are not accessible when the door 17 is moved to the closed position.

When the door 17 is in the open position (as shown in Figure 1) the pedal 1 and crank arm 2 of a bicycle can be inserted into the internal cavity 15. The side wall 14 has an opening 16 through which the portion of the bike (e.g. the bottom bracket) connected to the crank arm 2 can project.

For example, the user can align the bicycle such that it is adjacent to side wall 14 of the structure and then reverse the bicycle until the pedal 1 and crank arm 2 are located within the internal cavity 15 as shown.

To secure the bicycle the door 17 can then be pivoted about the hinges 18 (in this example about a substantially vertical axis) until the door 17 is in the closed position, as shown in Figure 2. In the closed position the door 17 prevents the pedal 1 and the crank arm 2 from being removed from the internal cavity 15.

In addition, the arrangement of the door 17 and the walls of the structure 10 shields or prevents access to the interconnection between the crank arm 2 and the bike frame 3. Thus, a potential thief cannot remove the crank arm 2 from the bike frame 3 in order to release the bicycle from the structure 10. Similarly, the connection between the pedal 1 and the crank arm 2 is shielded by the door 17 and the walls of the structure.

A locking device 20 is provided to lock the door 17 in the closed position (as shown in Figure 2). In this example, locking device 20 has a retractable bolt or latch (not shown) which, when the door is in the closed position, can be inserted through aperture 21 provided in a tab attached to the side wall 14 of the structure. The locking device 20 can be activated and deactivated by either a physical key, electronic key, or combination code.

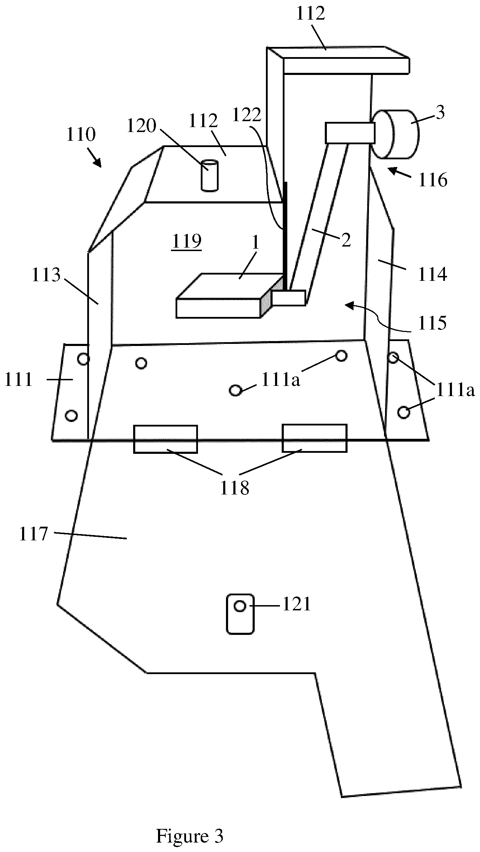

Another embodiment of the apparatus is shown in Figure 3, with the door 117 in the open configuration. Features which are common between Figure 3 and Figures 1 and 2 have the same reference numeral but increased by 100.

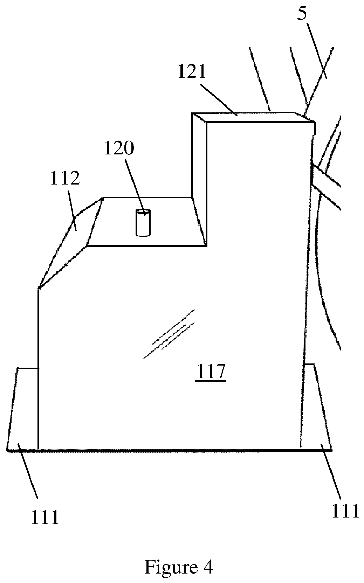

The base 111 of the structure comprises a plurality of apertures 111a. Each aperture 111a is configured to receive a fastener (such as a bolt) therethrough to mount the base 111 to a secure surface. As shown, some of the apertures 111a are disposed within the internal cavity 115. This means that the base 111 cannot be removed from the surface when the door 117 is in the closed configuration (see Figure 4). In Figure 4 the apparatus is illustrated with the fasteners inserted into the apertures 111a, so apertures 111a are not visible.

A barrier member 122 is connected to the structure 110 and extends into the internal cavity 115. The barrier member 122 is positioned such that it abuts or is located just above the top of the pedal 1. The barrier member 122 can be raised or lowered to ensure that it is in the correct position for the pedal 1. In the example shown in Figure 3 the barrier member 122 is a metal plate, but it could alternatively be a rod or sheet of non-metallic material. The barrier member 122 is positioned to prevent or restrict movement of the pedal 1 within the internal cavity 115, for example to prevent the bicycle being lifted which can cause damage. In Figure 3, the door 117 is mounted to the base 111 via hinges 118, rather than to one of the upstanding side walls 113, 114. Thus, the door 117 pivots about a substantially horizontal axis. As such, the locking device 120 is seated within an opening in the top 112 of the structure.

The locking device 120 has a retractable bolt or latch. A tab having an aperture 121 therethrough is attached to the inner surface of the door 117. The tab projects substantially transverse to the inner surface of the door 117. When the door 117 is in the closed position (see Figure 4) the aperture 121 is aligned with the locking device 120 such that the retractable bolt or latch of the locking device 120 can be inserted through the aperture 121 to lock the door in the closed position.

In Figure 3 the structure 110 is shaped (or contoured) to fit more closely around the pedal 1 and crank arm 2 compared to structure 10. This may be a more efficient use of space and materials.

The side wall 114 still has an opening 116 for receiving a portion of the bicycle, for example the bottom bracket where the crank arm 2 is connected to the bike frame 3. The structure 110 is shaped to substantially encase or shield the crank arm 2 and the pedal 1.

When the pedal 1 and the crank arm 2 are received into the internal cavity 115 the door 117 can be pivoted upwards on hinges 118 to close or seal the structure 110, as shown in Figure 4. In the closed position the base 111, side walls 113, 114, end wall 119 and top wall 112 of the structure together with the door 117 effectively form a housing for enclosing the pedal 1 and the crank arm 2. The bicycle 5 is positioned adjacent to the side wall 114 of the structure and locked relative to the secure surface (e.g. the floor or ground).

It will be appreciated that any type of locking device 20, 120 can be used with the present invention, not just the examples shown above. For example, a magnetic lock could be used.

It may be preferred for the locking device to be activated by entering an electronic code, or mechanically entering a combination, so that the user does not have to keep track of a physical key.

It should be noted that the above-mentioned embodiments illustrate rather than limit the invention, and that those skilled in the art will be capable of designing many alternative embodiments without departing from the scope of the invention as defined by the appended claims. For example, one or more walls of the structure could be curved, rather than straight.

In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of' and "comprising" means "including or consisting of'. The singular reference of an element does not exclude the plural reference of such elements and vice-versa. The mere fact that certain measures are recited in mutually different dependent claims does not indicate that a combination of these measures cannot be used to advantage.

## Claims

1. An apparatus for securing a bicycle, the apparatus comprising:
a structure configured to be mounted to a secure surface, wherein the structure comprises an internal cavity;
a door moveable relative to the structure between an open position in which the pedal can be received into the internal cavity of the structure and a closed position in which the pedal is retained in the internal cavity; and
a locking device configured to lock the door in the closed position.

2. The apparatus according to claim 1, wherein the structure and the door are configured to substantially encase or enclose the pedal when the door is in the closed position.

3. The apparatus according to claim 1 or claim 2, wherein the structure and/or the door are configured to shield or restrict access to the interconnection between the crank arm and the bicycle frame.

4. The apparatus according to any preceding claim, wherein the structure is configured such that the crank arm attached to the pedal can be received into the internal cavity; and/or
wherein the structure is configured such that, in the open position, the bicycle can be wheeled along the secure surface to insert the pedal and the crank arm attached thereto into the internal cavity.

5. The apparatus according to claim 4, wherein the structure and the door are configured to substantially encase or enclose the pedal and the crank arm when the door is in the closed position.

6. The apparatus according to any preceding claim, wherein the structure comprises a base and at least one upstanding wall, wherein the internal cavity is defined by the space between the base and the at least one upstanding wall.

7. The apparatus according to claim 6, wherein the structure further comprises a top, and wherein the door forms part of, or is attached to, the at least one upstanding wall; and/or
wherein the base comprises a plurality of apertures each configured to receive a fastener therethrough to mount the structure to a secure surface.

8. The apparatus according to any preceding claim, wherein the structure comprises a base, a top, two opposing side walls and an end wall.

9. The apparatus according to claim 8, wherein in the closed position the door is disposed opposite the end wall and adjacent the base and the two side walls; and/or wherein one of the side walls comprises an opening configured to receive a portion of the bicycle.

10. The apparatus according to any preceding claim, wherein the door is pivotable relative to the structure.

11. The apparatus according to claim 10, wherein the door is pivotably connected to the structure by at least one hinge, and wherein the, or each, hinge is positioned such that they are not accessible when the door is in the closed position.

12. The apparatus according to any preceding claim, wherein the locking device comprises a retractable bolt or latch.

13. The apparatus according to claim 12, wherein a tab having an aperture therethrough is attached to an inner surface of the door, wherein the aperture is arranged such that when the door is in the closed position the retractable bolt or latch of the locking device can be inserted through the aperture to lock the door in the closed position.

14. The apparatus according to any preceding claim, further comprising a barrier member mounted to the structure and arranged to project into the internal cavity such that, in use, the barrier member is positioned to restrict movement of the pedal.

15. The apparatus according to claim 14, wherein the barrier member is positioned to at least partially abut the top of the pedal when the pedal is received into the internal cavity; and/or
wherein the position of the barrier member within the internal cavity is adjustable.
